# EUROPÄISCHE PATENTSCHRIFT

(11) **EP 3 812 860 B1**
(45) Veröffentlichungstag und Bekanntmachung des Hinweises auf die Patenterteilung: **22.11.2023**
(21) Anmeldenummer: 20196787.4
(22) Anmeldetag: 18.09.2020
(51) Int. Cl.: G05B 19/418

(54) **FERTIGUNGSSTEUERUNGSSYSTEM**
PRODUCTION CONTROL SYSTEM
SYSTÈME DE COMMANDE DE FABRICATION

(30) Priorität: 17.10.2019 DE 102019128101
(43) Veröffentlichungstag der Anmeldung: 28.04.2021
(73) Patentinhaber: MHP Management- und IT-Beratung GmbH, 71638 Ludwigsburg (DE)
(72) Erfinder: Junginger, Dr., Markus, 73087 Bad Boll (DE); Hofmann, Dr., Ralf, 74080 Heilbronn (DE)
(74) Vertreter: Ruckh, Rainer Gerhard

(56) Entgegenhaltungen:
- WO-A1-2015/132378
- CN-B- 106 527 383
- S. MAKRIS ET AL: "Cooperating Robots for Reconfigurable Assembly Operations: Review and Challenges", PROCEDIA CIRP, Bd. 3, 16. Mai 2012 (2012-05-16), Seiten 346-351, XP055466419, NL ISSN: 2212-8271, DOI: 10.1016/j.procir.2012.07.060

## Beschreibung

Die Erfindung betrifft ein Fertigungssteuerungssystem.

Derartige Fertigungssteuerungssysteme dienen generell zur Steuerung von Fertigungseinrichtungen, die zur Fertigung unterschiedlicher Produkte dienen können. Der Begriff Fertigungseinrichtungen umfasst hierbei auch komplette Fertigungsanlagen, das heißt Fabriken.

In moderneren Fertigungsanlagen, das heißt Fabriken sind Fertigungsprozesse und Logistikabläufe weitestgehend automatisiert. Moderne Fabriken, sogenannte smartfactories, sind in Matrix-Zellen, das heißt flexible Fertigungszellen untergliedert, wobei die Logistikprozesse, insbesondere der Materialtransport zwischen den Matrix-Zellen, von Logistikmitteln in Form von autonom fahrenden Fahrzeugen, insbesondere FTS (fahrerlose Transportfahrzeuge) übernommen wird.

Die Matrix-Zellen und ein autonom fahrendes Fahrzeug werden von einer übergeordneten Steuerlogik gesteuert. Die übergeordnete Steuerlogik gibt insbesondere die mit den Matrix-Zellen durchzuführenden Fertigungsprozesse vor. Zudem werden die autonom fahrenden Fahrzeuge über die übergeordnete Steuerlogik gesteuert. Hierzu gibt die übergeordnete Steuerlogik eine zeitliche Reihenfolge von mit den Matrix-Zellen abzuarbeitenden Fertigungsprozessen vor. Abhängig hiervon gibt die übergeordnete Steuerlogik vor, wann welche Matrix-Zellen von autonom fahrenden Fahrzeugen angesteuert werden um diesen zum Beispiel Material zuzuführen.

Die CN 106 527 383 B betrifft ein cyberphysikalisches Kontrollsystem mit einem Kontrollmodul, einem Sensormodul, einem Semantik-Modellierungsmodul, einem dynamischen Verbindungsmodul, einem Datenbasismodul und einem Ein-/Ausgabemodul. Das Semantik-Modellierungsmodul verknüpft Daten von industriellen Produktionsprozessen mit semantischen Labels. Das dynamische Verbindungsmodul verbindet dynamisch Schnittstellen von Modulen basierend auf Logik-Regeln, wobei Definitionen von Logik-Regeln im Datenbasismodul gespeichert sind.

Die WO 2015/132378 A1 betrifft eine Fertigungsanlage mit Fertigungsstationen für Werkstücke, die mehrere untereinander einheitliche Fertigungsstationen aufweist. Die Fertigungsstationen sind modular ausgebildet und weisen mehrere, integrierte Fertigungszellen mit jeweils einem eigenen Prozessbereich auf.

Der Erfindung liegt die Aufgabe zugrunde die Funktionalität eines Fertigungssteuerungssystems der eingangs genannten Art zu erhöhen.

Zur Lösung dieser Aufgabe sind die Merkmale der unabhängigen Ansprüche vorgesehen. Vorteilhafte Ausführungsformen und zweckmäßige Weiterbildungen der Erfindung sind in den abhängigen Ansprüchen beschrieben.

Die Erfindung betrifft ein Fertigungssteuerungssystem für eine Matrix-Zellen-Produktionsanlage mit einer Anordnung von Matrix-Zellen, welche jeweils zur Durchführung von Fertigungsprozessen ausgebildet sind, mit Logistikmitteln, welche zur Durchführung von Logistikprozessen ausgebildet sind und mit einer übergeordneten Steuerlogik, welche zur Steuerung der Matrix-Zellen und der Logistikmittel ausgebildet ist. Proprietäre Datenmodelle der Matrix-Zellen und Logistikmittel sind über Ontologie-Einheiten verknüpft, wodurch ein durchgängiger Datenstrom zwischen den Matrix-Zellen und den Logistikmitteln erhalten wird. Abhängig von Daten des Datenstroms sind in den einzelnen Matrix-Zellen selbsttätig Fertigungsprozesse definierbar und durchführbar. In einzelnen Logistikmitteln sind selbsttätig Logistikprozesse definierbar und durchführbar sind. Als Ontologie-Einheiten sind eine Ressourcen-Einheit, eine Prozess-Einheit und eine Produkt-Einheit vorgesehen, wobei in der Ressourcen-Einheit über Ontologien Daten, die Fertigungsabläufe und Logistikprozesse beschreiben, strukturiert und digital verfügbar gemacht werden. In der Produkt-Einheit werden Produktdaten bereitgestellt und verfügbar gemacht. In der Prozess-Einheit werden abhängig von Daten von proprietären Datenmodellen der Ressourcen-Einheit und Produkteinheit für Fertigungsmittel bzw. Arbeitsmittel Fertigungsprozesse in einem ausführbaren Programmcode programmiert.

Die Erfindung betrifft weiterhin ein Verfahren zur Steuerung einer Matrix-Zellen-Produktionsanlage.

Bei dem erfindungsgemäßen Fertigungssteuerungssystem ist eine übergeordnete Steuerlogik vorgesehen, die für eine Steuerung von Fertigungsprozessen, die mit einzelnen Matrix-Zellen durchgeführt werden, und von Logistikprozessen, die mit Logistikmitteln ausgeführt werden, ausgebildet ist.

Erfindungsgemäß ist die Funktionalität eines solchen Fertigungssteuerungssystems dadurch erweitert, dass die Matrix-Zellen und die Logistikmittel als lokale Einheiten selbst mit eigener Intelligenz ausgestattet werden, so dass diese selbsttätig, das heißt ohne Anweisungen oder Steuerbefehle von der übergeordneten Steuerlogik zu erhalten, Prozesse definieren und durchführen können. Dabei kann eine Matrix-Zelle selbsttätig Fertigungsprozesse definieren, die auf dieser durchführbar sind und auch diese Fertigungsprozess selbsttätig durchführen. Entsprechend kann ein Logistikmittel selbsttätig Logistikprozesse definieren und durchführen.

Durch diese verteilte Intelligenz wird einerseits die übergeordnete Steuerlogik entlastet. Die übergeordnete Steuerlogik muss nicht mehr alle Prozesse der Matrix-Zelle und Logistikmittel selbst vorgeben, so dass dort der erforderliche Rechenaufwand reduziert ist und die Anforderungen hinsichtlich Aufbau und Kapazität der übergeordneten Steuerlogik gering gehalten werden können.

Andererseits können lokale Matrix-Zellen und Logistikmittel ihre Funktionen und Auslastungen abhängig von deren aktuellem Zustand und auch abhängig von geplanten Prozessen optimieren. Dabei können auch Wechselwirkungen mit anderen Matrix-Zellen und Logistikmitteln in diese Optimierungen miteinbezogen werden.

Diese Optimierungen erfolgen generell abhängig von den mittels der übergeordneten Steuerlogik definierten Steuerungsvorgängen, so dass die lokalen Optimierungsprozesse in den Matrix-Zellen und Logistikmitteln nicht mit den von der übergeordneten Steuerlogik vorgegebenen Steuerungsvorgängen kollidieren. Weiterhin erfolgen Optimierungen in einzelnen Matrix-Zellen oder Logistikmitteln abhängig von den Zuständen anderer Matrix-Zellen und Logistikmitteln, so dass die Matrix-Zellen und Logistikmittel untereinander kollisionsfrei arbeiten.

Gemäß einer vorteilhaften Ausführungsform ist die übergeordnete Steuerlogik ausgebildet Produktionsvorgaben zu definieren. Abhängig von diesen werden in den Matrix-Zellen selbsttätig Fertigungsprozesse und/oder in den Logistikmitteln selbsttätig Logistikprozesse generiert.

In diesem Fall definiert die übergeordnete Steuerlogik durch die Definition von Produktionsvorgaben übergeordnete Steuerbefehle. Abhängig von diesen übergeordneten Steuerbefehlen generieren die Matrix-Zellen selbsttätig Fertigungsprozesse und die Logistikmittel selbsttätig Logistikprozesse, die vorteilhaft von der übergeordneten Steuerlogik kontrolliert und überwacht werden. Bei drohenden Kollisionen können dann beispielsweise selektiv und zeitabhängig Fertigungsprozesse einzelner Matrix-Zellen und Logistikprozesse einzelner Logistikmittel gesperrt und erst zu späteren Zeitpunkten freigegeben werden.

Besonders vorteilhaft erfolgt die selbsttätige Generierung von Fertigungsprozessen in den Matrix-Zellen und/oder Logistikprozessen in den Logistikmitteln abhängig von Prozess- und Ressourcen-Verfügbarkeiten von Matrix-Zellen und/oder Logistikmittel.

Damit kann eine Optimierung der Auslastungen der einzelnen Matrix-Zellen und Logistikmittel erzielt werden.

Insbesondere werden Zeiträume von Prozess- und Ressourcen-Verfügbarkeiten berücksichtigt.

Damit wird eine vorausschauende Planung und Optimierung von Prozessen ermöglicht.

Weiter vorteilhaft erfolgt die selbsttätige Generierung von Fertigungsprozessen in den Matrix-Zellen und/oder Logistikprozessen in den Logistikmitteln abhängig von Fertigungskosten.

Insbesondere kann kostenoptimiert entschieden werden, welche Matrix-Zellen zu welchen Zeiten Fertigungsprozesse und welche Logistikmittel zu welchen Zeiten Logistikprozesse durchführen sollen. Diese Entscheidungen können beispielsweise abhängig von Energiekosten der mit den einzelnen Matrix-Zellen oder Logistikmitteln durchgeführten Prozesse getroffen werden.

Gemäß einer vorteilhaften Ausführungsform sind die Logistikmittel von autonom fahrenden Fahrzeugen gebildet.

Insbesondere können derartige autonom fahrende Fahrzeuge als FTS (fahrerlose Transportsysteme) ausgebildet sein.

In diesem Fall kann vorteilhaft als selbsttätig in einem autonom fahrenden Fahrzeug generierter Logistikprozess eine Auswahl von anzusteuernder Matrix-Zellen vorgegeben werden.

Das autonom fahrende Fahrzeug wählt somit selbsttätig das oder die Matrix-Zellen aus, die beispielsweise mit Materialien zu bedienen sind.

Gemäß einer weiteren vorteilhaften Ausführungsform ist als ein selbsttätig in einem autonom fahrenden Fahrzeug generierter Logistikprozess eine Reihenfolge von anzusteuernden Matrix-Zellen vorgebbar.

Für die Fertigung eines bestimmten Teils oder einer Baueinheit aus mehreren Teilen kann von der übergeordneten Steuerlogik eine Abfolge von Fertigungsprozessen definiert werden, die in ein autonom fahrendes Fahrzeug als Logistikmittel eingegeben wird. Das autonom fahrende Fahrzeug fährt dann selbsttätig nacheinander Matrix-Zellen an, wo diese Abfolge von Fertigungsprozessen durchgeführt wird. Das autonom fahrende Fahrzeug sucht somit selbsttätig einen Weg durch die Matrix-Zellen-Produktionsanlage und wählt dabei geeignete Matrix-Zellen aus, wobei bei dieser Auswahl die freien Ressourcen der einzelnen Matrix-Zellen berücksichtigt werden können. Weiterhin können als Randbedingung bei dieser Auswahl die Fertigungskosten, insbesondere Energiekosten, die bei der Durchführung von Fertigungsprozessen mit einzelnen Matrix-Zellen entstehen, berücksichtigt werden.

Gemäß einer weiteren Ausgestaltung der Erfindung sind Matrix-Zellen zur Fertigung von Teilen ausgebildet.

In diesem Fall ist als selbsttätig in einer Matrix-Zelle generierter Fertigungsprozess die Fertigung von Ersatzteilen vorgesehen.

Die übergeordnete Steuerlogik gibt in diesem Fall wieder Produktionsvorgaben vor, in Abhängigkeit derer mit einer Matrix-Zelle spezifische Teile gefertigt werden, die zur Fertigstellung beauftragter Produkte dienen. Die jeweilige Matrix-Zelle nutzt dann Zeiten, in welchen diese nicht ausgelastet ist, zur Produktion von Ersatzteilen, die in der Produktion der Produkte nicht eingeplant sind. Hierzu definiert die jeweilige Matrix-Zelle selbst die entsprechenden Fertigungsprozesse zur Fertigung der Ersatzteile. Der Umfang der gefertigten Ersatzteile kann abhängig von wirtschaftlichen Randbedingungen wie Lagerkapazitäten, Materialverfügbarkeiten und dergleichen in der Matrix-Zelle definiert werden.

Gemäß einer vorteilhaften Ausführungsform sind selbsttätig generierbare Fertigungsprozesse und/oder Logistikprozesse mittels Simulationsverfahren definierbar.

Die Simulation erfolgt vorzugsweise in Abhängigkeit von vorgegebenen Randbedingungen wie spezifischen Produktionsvorgaben oder wirtschaftlichen Randbedingungen wie Fertigungskosten.

Als Ergebnisse der Simulation können zeitabhängige Optimierungen für Art und Umfang von Fertigungsprozessen, die selbsttätig in Matrix-Zellen initiiert werden können, und Logistikprozesse, die selbsttätig in Logistikmittel generiert werden, durchgeführt werden. Die bei der Simulation erhaltenen Ergebnisse für derartige Fertigungsprozesse und Logistikprozesse können dann in realen Produktionsvorgängen umgesetzt werden.

Gemäß einer weiteren vorteilhaften Ausführungsform ist die Matrix-Zellen-Produktionsanlage in ein Cloud-Rechnernetzwerk eingebunden.

Die Matrix-Zellen-Produktionsanlage kann dann auf räumlich verteilte Systeme erweitert sein, die über eine Cloud miteinander verbunden sind. Hier können vorteilhaft in lokalen Untereinheiten der verteilten Matrix-Zellen-Produktionsanlagen in den Matrix-Zellen selbsttätige Fertigungsprozesse und in den Logistikmitteln selbsttätig Logistikprozesse generiert werden, so dass diese lokalen Untereinheiten jeweils für sich Systeme mit lokaler Intelligenz ausbilden.

Eine wesentliche Voraussetzung für die Funktionsfähigkeit des erfindungsgemäßen Fertigungssteuerungssystems ist die Vernetzung der Komponenten, insbesondere der Matrix-Zellen und Logistikmittel untereinander, so dass zwischen diesen ein standardisierter, durchgehender Datenstrom vorhanden ist.

Erfindungsgemäß erfolgt hierzu mittels wenigstens einer Ontologie-Einheit eine semantische Vernetzung aller verschiedenen proprietären Datenmodelle der einzelnen Einheiten der Matrix-Zellen-Produktionsanlage insbesondere aller Matrix-Zellen und Logistikmittel.

Damit wird ein durchgehender Austausch von Informationen zwischen allen proprietären Datenmodellen ermöglicht ohne dass auf Systemebene einzelne Schnittstellen vorgesehen werden müssen. Die mit der Ontologie-Einheit erzielte semantische Vernetzung ermöglicht vielmehr eine Abbildung der Datenmodelle in einem übergreifenden digitalen Modell, einen sogenannten digitalen Zwilling, mittels dessen ohne zusätzlichen Hardwareaufwand auf Systemebene ein bidirektionaler harmonisierender Datenstrom zwischen allen Einheiten einer Fertigungseinrichtung ermöglicht wird. Hierbei können insbesondere völlig unterschiedliche proprietäre Datenmodelle aus den Bereichen Produktentwicklung, Fertigung und Logistik vernetzt werden.

Gemäß einer vorteilhaften Ausführungsform sind in der Ontologie-Einheit Ontologien bildende Klassenstrukturen vorgegeben sind, die hierarchisch oder in Verbänden strukturierte Klassen aufweisen, mittels derer eine semantische Vernetzung der proprietären Datenmodelle durchführbar ist.

Vorteilhaft sind die Ontologien mittels Standardprotokollen beschrieben, wie zum Beispiel einen RDF (Ressource Description Framework).

Die Erfindung wird im Folgenden anhand der Zeichnungen erläutert. Es zeigen:
- Figur 1:: Schematische Darstellung eines Ausführungsbeispiels der erfindungsgemäßen Matrix-Zellen-Produktionsanlage.
- Figur 2:: Blockschaltbild eines Fertigungssteuerungssystems für die Matrix-Zellen-Produktionsanlage gemäß Figur 1.
- Figur 3:: Ausführungsbeispiel für eine selbsttätige Generierung von Logistikprozessen eines als autonom fahrendes Fahrzeug ausgebildeten Logistikmittel.

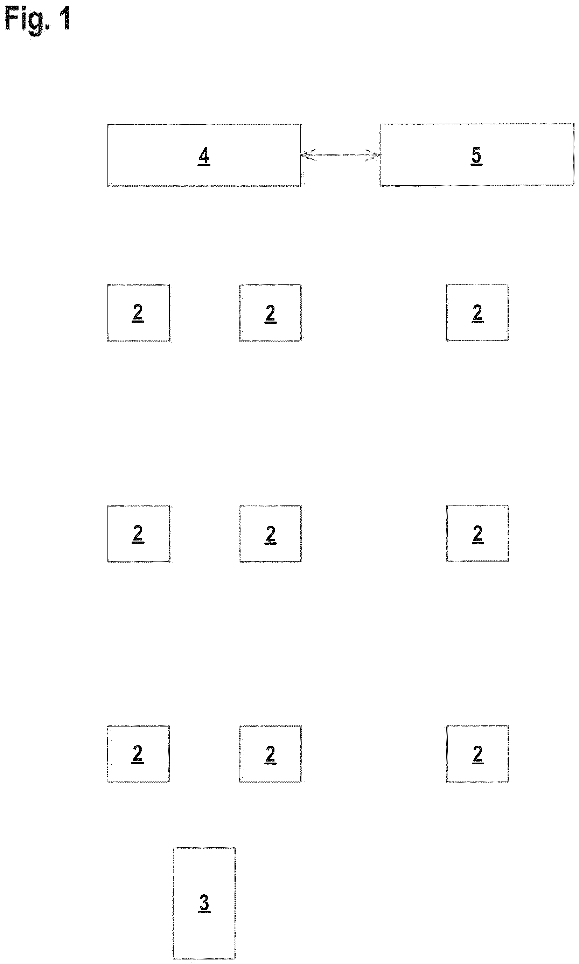

Figur 1 zeigt schematisch den Aufbau einer Matrix-Zellen-Produktionsanlage 1, die beispielsweise in einer Fabrik installiert sein kann. Generell kann die Matrix-Zellen-Produktionsanlage 1 auch über mehrere Standorte verteilt sein, wobei diese insbesondere zur Fertigung von Kraftfahrzeugen dienen können.

Die Matrix-Zellen-Produktionsanlage 1 weist eine Mehrfachanordnung einzelner Matrix-Zellen 2 auf, die aufgrund ihrer spezifischen Ausbildung zur Durchführung unterschiedlicher Fertigungsprozesse ausgebildet sind. Der Begriff Fertigungsprozess umfasst dabei generell Bearbeitungsprozesse von Teilen, Montagevorgänge aber auch Positionierungs- oder Bereitstellungsvorgänge. Jede Matrix-Zelle 2 weist eine nicht dargestellte Rechnereinheit auf.

Die Matrix-Zellen-Produktionsanlage 1 weist ferner eine Anzahl von Logistikmitteln auf, die zur Durchführung von Logistikprozessen ausgebildet sind. Die Logistikmittel sind im vorliegenden Fall von autonom fahrenden Fahrzeugen 3 gebildet, vorzugsweise von FTS (fahrerlose Transportsysteme). Jedes autonom fahrende Fahrzeug weist eine nicht dargestellte Rechnereinheit auf.

Mit den autonom fahrenden Fahrzeugen 3 können Logistikprozesse derart durchgeführt werden, dass mit diesen Materialien einzelner Matrix-Zellen 2 zugeführt oder von diesen abgeholt werden.

Der Übersichtlichkeit halber ist in Figur 1 nur ein autonom fahrendes Fahrzeug 3 dargestellt.

Zur zentralen Steuerung der Matrix-Zellen 2 und Logistikmittel ist eine übergeordnete Steuerlogik 4 vorgesehen, die zum Beispiel in Form von neuronalen Netzen ausgebildet ist.

Der übergeordneten Steuerlogik 4 ist ein Rechnersystem 5 zugeordnet, auf welcher eine betriebswirtschaftliche Unternehmenssoftware implementiert ist. Die übergeordnete Steuerlogik 4 kann zu Steuerzwecken betriebswirtschaftliche Daten aus dem Rechnersystem 5 auslesen.

Alle Einheiten der Matrix-Zellen-Produktionsanlage 1, das heißt die übergeordnete Steuerlogik 4, das Rechnersystem 5, die Matrix-Zellen 2 sowie die autonom fahrenden Fahrzeuge 3 sind über vorzugsweise berührungslos arbeitende Datenschnittstellen miteinander gekoppelt, so dass sie so untereinander Daten austauschen können.

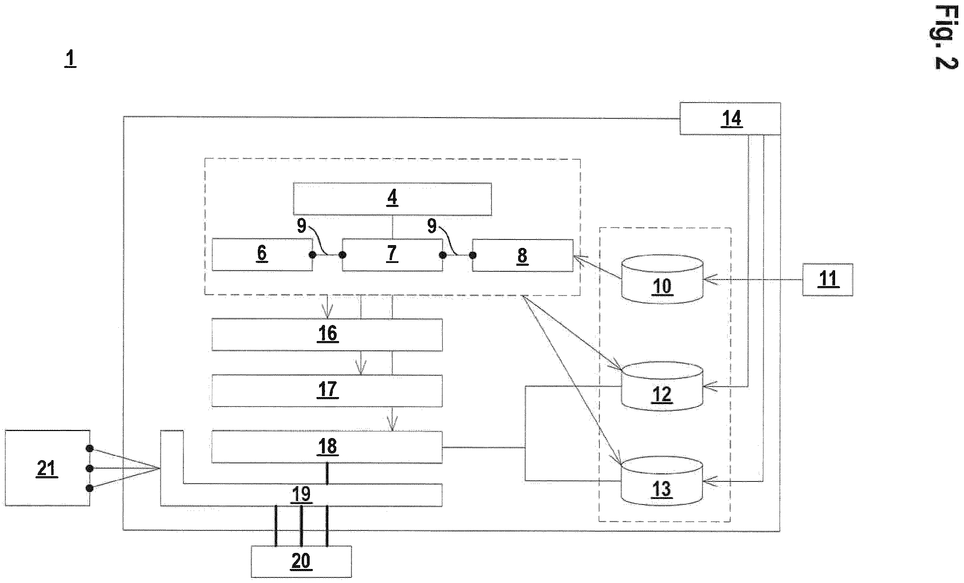

Figur 2 zeigt ein Beispiel eines Fertigungssteuerungssystems für die Matrix-Zellen-Produktionsanlage 1 gemäß Figur 1.

Erfindungsgemäß weist das Fertigungssteuerungssystem eine Anordnung von Ontologie-Einheiten auf, mittels derer proprietäre Datenmodelle der herstellerspezifischen Matrix-Zellen 2 und Logistikmittel und auch produkteinrichtungsspezifischen Daten und Prozesse semantisch vernetzt werden.

Wie Figur 2 zeigt, sind als Ontologie-Einheiten eine Ressourcen-Einheit 6, eine Prozess-Einheit 7 und eine Produkt-Einheit 8, die von der übergeordneten Steuerlogik 4 gesteuert werden, vorgesehen. Diese Ontologie-Einheiten bilden ein virtuelles Modell der in der Fertigungseinrichtung ablaufenden Prozesse.

In den einzelnen Ontologie-Einheiten sind Ontologien bildende Objektmodelle vorgesehen, die über geeignete ontologische Verknüpfungen 9 miteinander verknüpft sind und somit eine semantische Vernetzung von in der Ressourcen-Einheit 6, der Prozess-Einheit 7 und der Produkt-Einheit 8 vorhandenen proprietären Datenmodellen bewerkstelligen.

In der Ressourcen-Einheit 6 werden über Ontologien Daten, die Fertigungsabläufe beschreiben und definieren strukturiert und digital verfügbar gemacht. Die Daten bilden fertigungsspezifische proprietäre Datenmodelle aus, die über die Ontologien in einen harmonisierten Datenstrom, der über alle Einheiten der Fertigungseinrichtung fließen kann, eingebunden werden.

Zu den Fertigungsabläufen gehören allgemein nicht nur Fertigungsprozesse sondern auch Logistikprozesse.

In der Prozess-Einheit 7 werden abhängig von Daten von proprietären Datenmodellen der Ressourcen-Einheit 6 und Produkt-Einheit 8 für Fertigungs- beziehungsweise Arbeitsmittel wie Roboter bestimmte Fertigungsprozesse in einem ausführbaren Programmcode (beispielsweise in einem SPS-Code) programmiert. Durch die Ontologien ist ein harmonisierender Datenstrom zischen der Prozess-Einheit 7 und der Ressourcen-Einheit 6 und Produkt-Einheit 8 möglich ohne dass hierfür auf Systemebene entsprechende Schnittstellen vorgesehen sein müssen.

In der Produkt-Einheit 8 werden Produktdaten 10 bereitgestellt und verfügbar gemacht. Wie Figur 2 zeigt, werden abhängig von extern, kundenspezifisch vorgegebenen Produktspezifikationen 11 Produktdaten 10 in proprietären Datenmodulen, beispielsweise als CAD-Daten der Produkt-Einheit 8 zur Verfügung gestellt.

In der Produkt-Einheit 8 erfolgt eine Verarbeitung und Bereitstellung dieser Produktdaten 10. Insbesondere werden die Produktdaten 10 als Persistence-Daten 12 in einem Arbeitsspeicher als unveränderbare Speichermittel bleibend, vorzugsweise nicht flüchtig abgespeichert.

Weiterhin werden mittels der Ontologien der Produkt-Einheit 8 aus den Produktdaten 10 digitale Modelle generiert, die als sogenannte digitale Zwillinge 13 abgespeichert werden. Über eine Analyseeinheit 14 können die Persistence-Daten 12 und die digitalen Zwillinge 13 analysiert werden.

Insgesamt bilden die Ressourcen-Einheit 6, Prozess-Einheit 7 und die Produkt-Einheit 8 ein Ontologiemodell, mit dem alle proprietären Datenmodelle der Matrix-Zellen-Produktionsanlage 1 semantisch vernetzt sind, so dass zwischen allen Einheiten der Matrix-Zellen-Produktionsanlage 1 ein standardisierter, harmonischer Datenstrom aller Daten des Gesamtsystems erhalten wird, ohne dass hierfür mittels physikalischer Schnittstellen auf Systemebene eine Anpassung von zu übertragenen Daten notwendig wäre.

Die Ressourcen-Einheit 6 dient dabei zum Aufbereiten von proprietären Daten von Maschinenherstellern, die Arbeits- beziehungsweise Fertigungsmittel wie Bearbeitungsmaschinen und Logistikmittel wie FTS mit definierten Funktionalitäten liefern und bereitstellen.

Die Produkt-Einheit 8 dient zum Aufbereiten und Bereitstellen von kundenspezifischen proprietären Produktdaten 10.

Schließlich werden in der Prozess-Einheit 7 von Prozess-Designern ebenfalls proprietäre Daten generiert, in dem dort ausführbare Programmcodes für Fertigungs- und Logistikmittel generiert werden.

Die in der Ressourcen-Einheit 6, der Prozess-Einheit 7 und der Produkt-Einheit 8 generierten Daten und Programme werden einer Validierungsschicht 16 und einer Programmierschicht 17 zugeführt.

In der Validierungsschicht 16 erfolgt eine Überprüfung und Validierung von erstellten Programmcodes. Insbesondere erfolgt eine Inbetriebnahme derart, dass geprüft wird, ob die programmierten Prozesse machbar, insbesondere kollisionsfrei sind.

Mit der Programmierschicht 17 erfolgt nach erfolgreicher Validierung eine Generierung von Maschinencodes, für die Fertigungs- und Arbeitsmittel.

Als weiterer Bestandteil des erfindungsgemäßen Ontologiemodells ist eine Normalisierungsschicht 18 vorgesehen. Dort erfolgt eine Übersetzung von in Hochsprachen abgefasstem Programmcode in Anwender-Software wie zum Beispiel einer SPS-Software.

Schließlich ist eine Adapterschicht 19 vorgesehen, die die Verbindung zu Kommunikationseinheiten 20 wie Mail, Internet und dergleichen herstellt. Weiterhin dient die Adapterschicht 19 zur Herstellung von Verbindungen mit externen Einheiten 21 von Zulieferern, Partnerfirmen und dergleichen.

Erfindungsgemäß wird der mit der Ontologien generierte standardisierte Datenstrom zwischen den einzelnen Einheiten der Matrix-Zellen-Produktionsanlage 1 dazu genutzt, dass die einzelnen Matrix-Zellen 2 selbsttätig Fertigungsprozesse definieren und durchführen können, und dass die Logistikmittel, das heißt die autonom fahrenden Fahrzeuge 3 selbsttätig Logistikprozesse definieren und durchführen können.

Zweckmäßig ist die übergeordnete Steuerlogik 4 ausgebildet Produktionsvorgaben zu definieren. Abhängig von diesen werden in den Matrix-Zellen 2 selbsttätig Fertigungsprozesse und/oder in den Logistikmitteln selbsttätig Logistikprozesse generiert.

Dabei ist vorteilhaft die übergeordnete Steuerlogik 4 zur Überwachung der Einhaltung der Produktionsvorgaben ausgebildet.

Vorteilhaft erfolgt die selbsttätige Generierung von Fertigungsprozessen in den Matrix-Zellen 2 und/oder Logistikprozessen in den Logistikmitteln abhängig von Prozess- und Ressourcen-Verfügbarkeiten von Matrix-Zellen 2 und/oder Logistikmitteln.

Weiterhin können Zeiträume von Prozess- und Ressourcen- Verfügbarkeiten berücksichtigt.

Die betriebswirtschaftlichen Daten betreffend die Fertigungskosten werden über die betriebswirtschaftliche Unternehmenssoftware bereitgestellt.

Ein derartiges intelligentes Maschinenverhalten kann beispielsweise für Matrix-Zellen 2 angewendet werden, die zur Fertigung von Teilen ausgebildet sind.

Die übergeordnete Steuerlogik 4 gibt Produktionsvorgaben vor, gemäß derer diese Matrix-Zellen 2 zur vorgegebenen Zeiten vorgegebene Anzahlen von Teilen fertigen müssen, die dann im Produktionsprozess benötigt werden.

Die Matrix-Zelle 2 muss jedoch nicht ununterbrochen Teile für den Produktionsprozess fertigen und hat daher mehrere Stillstandszeiten. Erfindungsgemäß definiert die Matrix-Zelle 2 selbsttätig Fertigungsprozesse derart, dass diese Ersatzteile fertigt, die für den aktuellen Produktionsprozess nicht benötigt werden. Die Durchführung dieser Fertigungsprozesse das heißt die Fertigung der Ersatzteile erfolgt lokal an der Matrix-Zelle 2 gesteuert in deren Stillstandszeiten.

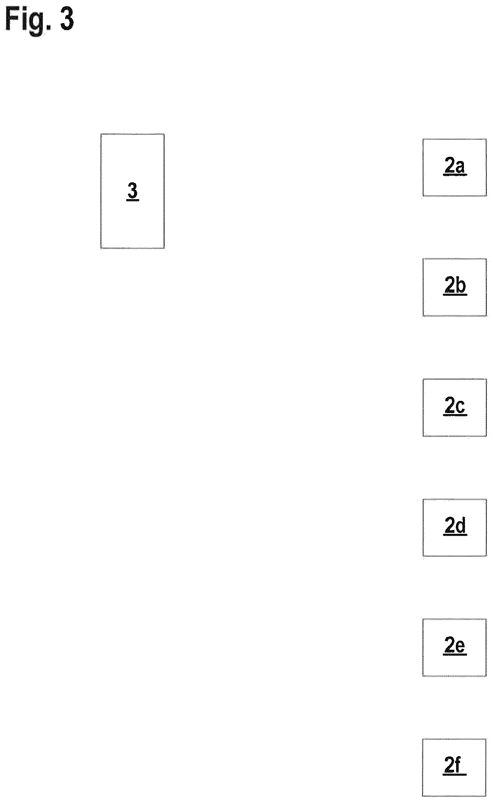

Ein weiteres Beispiel eines intelligenten Maschinenverhaltens zeigt Figur 3. Dort ist ein autonom fahrendes Fahrzeug 3 einer Reihe von Matrix-Zellen 2a - 2f zugeordnet, die unterschiedliche Fertigungsprozesse ausführen können, beispielsweise unterschiedliche Bearbeitungen von Teilen oder unterschiedliche Positionierungen von Teilen.

In dem autonom fahrenden Fahrzeug 3 können nun selbsttätig Logistikprozesse generiert werden. Ein Logistikprozess besteht jeweils aus einer bestimmten Reihenfolge von mit allen oder einem Teil der Matrix-Zellen 2a - 2f durchgeführten Fertigungsprozesse. Entsprechend den definierten Logistikprozessen fährt dann das autonom fahrende Fahrzeug 3 selbsttätig die Matrix-Zellen 2a - 2f an, so dass dort in der vorgegeben Reihenfolge die Fertigungsprozesse durchgeführt werden können.

### Bezugszeichenliste

- (1): Matrix-Zellen-Produktionsanlage
- (2): Matrix-Zelle
- (3): Autonom fahrendes Fahrzeug
- (4): Übergeordnete Steuerlogik
- (5): Rechnersystem
- (6): Ressourcen-Einheit
- (7): Prozess-Einheit
- (8): Produkt-Einheit
- (9): Verknüpfung
- (10): Produktdaten
- (11): Produktspezifikation
- (12): Persistencedaten
- (13): Digitaler Zwilling
- (14): Analyseeinheit
- (16): Validierungsschicht
- (17): Programmierschicht
- (18): Normalisierungsschicht
- (19): Adapterschicht
- (20): Kommunikationseinheit
- (21): Externe Einheit

## Patentansprüche

1. Fertigungssteuerungssystem für eine Matrix-Zellen-Produktionsanlage (1), mit einer Anordnung von Matrix-Zellen (2), welche jeweils zur Durchführung von Fertigungsprozessen ausgebildet sind, mit Logistikmitteln, welche zur Durchführung von Logistikprozessen ausgebildet sind, und mit einer übergeordneten Steuerlogik (4), welche zur Steuerung der Matrix-Zellen (2) und der Logistikmittel ausgebildet ist, **dadurch gekennzeichnet, dass** proprietäre Datenmodelle der Matrix-Zellen (2) und Logistikmittel über Ontologie-Einheiten verknüpft sind, wodurch ein durchgängiger Datenstrom zwischen den Matrix-Zellen und den Logistikmitteln erhalten wird, und dass abhängig von Daten des Datenstroms in einzelnen Matrix-Zellen (2) selbsttätig Fertigungsprozesse definiert und durchgeführt werden und/oder in einzelnen Logistikmitteln selbsttätig Logistikprozesse definiert und durchgeführt werden, wobei als Ontologie-Einheiten eine Ressourcen-Einheit (6), eine Prozess-Einheit (7) und eine Produkt-Einheit (8) vorgesehen sind, wobei in der Ressourcen-Einheit (6) über Ontologien Daten, die Fertigungsabläufe und Logistikprozesse beschreiben, strukturiert und digital verfügbar gemacht werden, wobei in der Produkt-Einheit (8) Produktdaten (10) bereitgestellt und verfügbar gemacht werden und wobei in der Prozess-Einheit (7) abhängig von Daten von proprietären Datenmodellen der Ressourcen-Einheit (6) und Produkteinheit (8) für Fertigungsmittel bzw. Arbeitsmittel Fertigungsprozesse in einem ausführbaren Programmcode programmiert werden.

2. Fertigungssteuerungssystem nach Anspruch 1, **dadurch gekennzeichnet, dass** die übergeordnete Steuerlogik (4) ausgebildet ist Produktionsvorgaben zu definieren, und dass abhängig von diesen in den Matrix-Zellen (2) selbsttätig Fertigungsprozesse und/oder in den Logistikmitteln selbsttätig Logistikprozesse generiert werden.

3. Fertigungssteuerungssystem nach Anspruch 2, **dadurch gekennzeichnet, dass** die übergeordnete Steuerlogik (4) zur Überwachung der Einhaltung der Produktionsvorgaben ausgebildet ist.

4. Fertigungssteuerungssystem nach einem der Ansprüche 1 - 3, **dadurch gekennzeichnet, dass** die selbsttätige Generierung von Fertigungsprozessen in den Matrix-Zellen (2) und/oder Logistikprozessen in den Logistikmitteln abhängig von Prozess- und Ressourcen-Verfügbarkeiten von Matrix-Zellen (2) und/oder Logistikmitteln erfolgt.

5. Fertigungssteuerungssystem nach Anspruch 4, **dadurch gekennzeichnet, dass** Zeiträume von Prozess- und Ressourcen-Verfügbarkeiten berücksichtigt werden.

6. Fertigungssteuerungssystem nach einem der Ansprüche 1 - 5, **dadurch gekennzeichnet, dass** die selbsttätige Generierung von Fertigungsprozessen in der Matrix-Zelle (2) und/oder Logistikprozessen in den Logistikmitteln abhängig von Fertigungskosten erfolgt.

7. Fertigungssteuerungssystem nach einem der Ansprüche 1 - 6, **dadurch gekennzeichnet, dass** die Logistikmittel von autonom fahrenden Fahrzeugen (3) gebildet sind.

8. Fertigungssteuerungssystem nach Anspruch 7, **dadurch gekennzeichnet, dass** als selbsttätig in einem autonom fahrenden Fahrzeug (3) generierter Logistikprozess eine Auswahl von anzusteuernden Matrix-Zellen (2) vorgebbar ist.

9. Fertigungssteuerungssystem nach einem der Ansprüche 7 oder 8, **dadurch gekennzeichnet, dass** als selbsttätig in einem autonom fahrenden Fahrzeug (3) generierter Logistikprozess eine Reihenfolge von anzusteuernden Matrix-Zellen (2) vorgebbar ist.

10. Fertigungssteuerungssystem nach einem der Ansprüche 1 - 9, **dadurch gekennzeichnet, dass** Matrix-Zellen (2) zur Fertigung von Teilen ausgebildet sind.

11. Fertigungssteuerungssystem nach Anspruch 7, **dadurch gekennzeichnet, dass** als selbsttätig in einer Matrix-Zelle (2) generierter Fertigungsprozess die Fertigung von Ersatzteilen vorgesehen ist.

12. Fertigungssteuerungssystem nach einem der Ansprüche 1 - 11, **dadurch gekennzeichnet, dass** selbsttätig generierbare Fertigungsprozesse und/oder Logistikprozesse mittels Simulationsverfahren definierbar sind.

13. Fertigungssteuerungssystem nach Anspruch 12, **dadurch gekennzeichnet, dass** mittels der Simulationsverfahren Auslastungsgrade von Matrix-Zellen (2) und Logistikmitteln optimierbar sind.

14. Fertigungssteuerungssystem nach einem der Ansprüche 1 - 13, **dadurch gekennzeichnet, dass** die Matrix-Zellen-Produktionsanlage (1) in ein Cloud-Rechnernetzwerk eingebunden ist.

15. Verfahren zur Steuerung einer Matrix-Zellen-Produktionsanlage (1), mit einer Anordnung von Matrix-Zellen (2), welche jeweils zur Durchführung von Fertigungsprozessen ausgebildet sind, mit Logistikmitteln, welche zur Durchführung von Logistikprozessen ausgebildet sind, und mit einer übergeordneten Steuerlogik (4), welche zur Steuerung der Matrix-Zelle (2) und der Logistikmittel ausgebildet ist, **dadurch gekennzeichnet, dass** proprietäre Datenmodelle der Matrix-Zellen (2) und Logistikmittel über Ontologie-Einheiten verknüpft sind, wodurch ein durchgängiger Datenstrom zwischen den Matrix-Zellen (2) und den Logistikmitteln erhalten wird und dass abhängig von Daten des Datenstroms in einzelnen Matrix-Zellen (2) selbsttätig Fertigungsprozesse definiert und durchgeführt werden und/oder in einzelnen Logistikmitteln selbsttätig Logistikprozesse definiert und durchgeführt werden, wobei als Ontologie-Einheiten eine Ressourcen-Einheit (6), eine Prozess-Einheit (7) und eine Produkt-Einheit (8) vorgesehen sind, wobei in der Ressourcen-Einheit (6) über Ontologien Daten, die Fertigungsabläufe und Logistikprozesse beschreiben, strukturiert und digital verfügbar gemacht werden, wobei in der Produkt-Einheit (8) Produktdaten (10) bereitgestellt und verfügbar gemacht werden und wobei in der Prozess-Einheit (7) abhängig von Daten von proprietären Datenmodellen der Ressourcen-Einheit (6) und Produkteinheit (8) für Fertigungsmittel bzw. Arbeitsmittel Fertigungsprozesse in einem ausführbaren Programmcode programmiert werden.

## Claims

1. A production control system for a matrix cell production plant (1), having an arrangement of matrix cells (2) which are each designed to carry out production processes, having logistics means which are designed to carry out logistics processes, and having a higher-level control logic (4) which is designed to control the matrix cells (2) and the logistics means, **characterised in that** proprietary data models of the matrix cells (2) and logistics means are linked via ontology units, as a result of which a continuous data stream is obtained between the matrix cells and the logistics means, and **in that**, depending on data of the data stream, production processes are automatically defined and executed in individual matrix cells (2) and/or logistics processes are automatically defined and executed in individual logistics means, a resource unit (6), a process unit (7) and a product unit (8) being provided as ontology units, wherein in the resource unit (6) data describing production sequences and logistics processes are made available in a structured and digital manner by means of ontologies, wherein in the product unit (8) product data (10) are provided and made available and wherein in the process unit (7), depending on data from proprietary data models of the resource unit (6) and product unit (8), production processes are defined in an executable form for production means or working means. production processes are programmed in an executable program code.

2. A production control system according to claim 1, **characterised in that** the higher-level control logic (4) is designed to define production specifications, and **in that**, depending on these, production processes are generated automatically in the matrix cells (2) and/or logistics processes are generated automatically in the logistics means.

3. A production control system according to claim 2, **characterised in that** the higher-level control logic (4) is designed to monitor compliance with the production specifications.

4. A production control system according to one of claims 1 to 3, **characterised in that** the automatic generation of production processes in the matrix cells (2) and/or logistics processes in the logistics means takes place depending on process and resource availabilities of matrix cells (2) and/or logistics means.

5. A production control system according to claim 4, **characterised in that** time periods of process and resource availabilities are taken into account.

6. A production control system according to one of the claims 1 to 5, **characterised in that** the automatic generation of production processes in the matrix cell (2) and/or logistics processes in the logistics means takes place depending on production costs.

7. A production control system according to one of the claims 1 to 6, **characterised in that** the logistics means are formed by autonomously driving vehicles (3).

8. A production control system according to claim 7, **characterised in that** a selection of matrix cells (2) to be controlled can be specified as a logistics process generated automatically in an autonomously driving vehicle (3).

9. A production control system according to one of claims 7 or 8, **characterised in that** a sequence of matrix cells (2) to be controlled can be specified as a logistics process generated automatically in an autonomously driving vehicle (3).

10. A production control system according to any one of claims 1 to 9, **characterised in that** matrix cells (2) are formed for production parts.

11. A production control system according to claim 7, **characterised in that** the production of spare parts is provided as a production process generated automatically in a matrix cell (2).

12. A production control system according to one of the claims 1 to 11, **characterised in that** production processes and/or logistics processes which can be generated automatically can be defined by means of simulation methods.

13. A production control system according to claim 12, **characterised in that** utilisation levels of matrix cells (2) and logistics means can be optimised by means of the simulation methods.

14. A production control system according to any one of claims 1 to 13, **characterised in that** the matrix cell production plant (1) is connected to a cloud computer network.

15. A method for controlling a matrix cell production plant (1), having an arrangement of matrix cells (2) which are each designed to carry out production processes, having logistics means which are designed to carry out logistics processes, and having a higher-level control logic (4) which is designed to control the matrix cell (2) and the logistics means, **characterised in that** proprietary data models of the matrix cells (2) and logistics means are linked via ontology units, as a result of which a continuous data stream is obtained between the matrix cells (2) and the logistics means, and **in that**, as a function of data of the data stream, production processes are automatically defined and executed in individual matrix cells (2) and/or logistics processes are automatically defined and executed in individual logistics means, wherein a resource unit (6), a process unit (7) and a product unit (8) are provided as ontology units, wherein data describing production sequences and logistics processes are made available in a structured and digital manner in the resource unit (6) via ontologies, wherein product data (10) are provided and made available in the product unit (8), and wherein production processes are defined and executed in the process unit (7) for production means or working means in an executable process as a function of data from proprietary data models of the resource unit (6) and product unit (8). production processes are programmed in an executable program code.

## Revendications

1. Système de commande de fabrication pour une usine de fabrication de cellules matricielles (1), comportant un agencement de cellules matricielles (2) conçues chacune pour exécuter des procédés de fabrication, comportant des moyens logistiques conçus pour exécuter des procédés logistiques, et comportant une logique de commande de niveau supérieur (4) conçue pour commander les cellules matricielles (2) et les moyens logistiques, **caractérisé en ce que** les modèles de données propriétaires des cellules matricielles (2) et des moyens logistiques sont liés par des unités ontologiques, ce qui permet d'obtenir un flux de données continu entre les cellules matricielles et les moyens logistiques, et **en ce que**, en fonction des données du flux de données, les procédés de fabrication sont automatiquement définis et exécutés dans des cellules matricielles individuelles (2) et/ou les procédés logistiques sont automatiquement définis et exécutés dans des moyens logistiques individuels, les procédés de fabrication sont automatiquement définis et exécutés dans des cellules matricielles individuelles (2) et/ou les procédés logistiques sont automatiquement définis et exécutés dans des moyens logistiques individuels, une unité de ressources (6), une unité de traitement (7) et une unité de produit (8) étant prévues en tant qu'unités d'ontologie, dans lesquelles dans l'unité de ressources (6) les données décrivant les séquences de fabrication et les procédés logistiques sont mises à disposition de manière structurée et numérique à l'aide d'ontologies, dans laquelle l'unité de produit (8) fournit et met à disposition des données de produit (10) et dans laquelle l'unité de traitement (7), en fonction des données provenant des modèles de données propriétaires de l'unité de ressource (6) et de l'unité de produit (8), définit les procédés de fabrication sous une forme exécutable pour les moyens de fabrication ou les moyens de travail. les procédés de fabrication sont programmés dans un code de programme exécutable.

2. Système de commande de fabrication selon la revendication 1, **caractérisé par le fait que** la logique de commande de niveau supérieur (4) est conçue pour définir les spécifications de fabrication et que, en fonction de celles-ci, les procédés de fabrication sont générés automatiquement dans les cellules matricielles (2) et/ou les procédés logistiques sont générés automatiquement dans les moyens logistiques.

3. Système de commande de fabrication selon la revendication 2, **caractérisé par le fait que** la logique de commande de niveau supérieur (4) est conçue pour surveiller la conformité aux spécifications de fabrication.

4. Système de commande de fabrication selon l'une des revendications 1 à 3, **caractérisé par le fait que** la génération automatique de procédés de fabrication dans les cellules matricielles (2) et/ou de procédés logistiques dans les moyens logistiques s'effectue en fonction des disponibilités de processus et de ressources des cellules matricielles (2) et/ou des moyens logistiques.

5. Système de commande de fabrication selon la revendication 4, **caractérisé par** la prise en compte des périodes de disponibilité des procédés et des ressources.

6. Système de commande de fabrication selon l'une des revendications 1 à 5, **caractérisé par le fait que** la génération automatique des procédés de fabrication dans la cellule matricielle (2) et/ou des procédés logistiques dans les moyens logistiques se déroule en fonction des coûts de fabrication.

7. Système de commande de fabrication selon l'une des revendications 1 à 6, **caractérisé par le fait que** les moyens logistiques sont constitués de véhicules à conduite autonome (3).

8. Système de commande de fabrication selon la revendication 7, **caractérisé par le fait qu'**une sélection de cellules matricielles (2) à commander peut être spécifiée en tant que traitement logistique généré automatiquement dans un véhicule à conduite autonome (3).

9. Système de commande de fabrication selon l'une des revendications 7 ou 8, **caractérisé par le fait qu'**une séquence de cellules matricielles (2) à commander peut être spécifiée en tant que traitement logistique généré automatiquement dans un véhicule à conduite autonome (3).

10. Système de commande de fabrication selon l'une des revendications 1 à 9, **caractérisé par** la formation de cellules matricielles (2) pour les pièces de fabrication.

11. Système de commande de fabrication selon la revendication 7, **caractérisé par le fait que** la fabrication de pièces détachées est fournie en tant que procédés de fabrication générés automatiquement dans une cellule matricielle (2).

12. Système de commande de fabrication selon l'une des revendications 1 à 11, **caractérisé par le fait que** les procédés de fabrication et/ou les procédés logistiques qui peuvent être générés automatiquement peuvent être définis au moyen de procédés de simulation.

13. Système de commande de fabrication selon la revendication 12, **caractérisé par le fait que** les niveaux d'utilisation des cellules matricielles (2) et des moyens logistiques peuvent être optimisés au moyen des procédés de simulation.

14. Système de commande de fabrication selon l'une des revendications 1 à 13, **caractérisé par le fait que** l'usine de fabrication de cellules matricielles (1) est connectée à un réseau informatique en nuage.

15. Procédé de commande d'une installation de fabrication de cellules matricielles (1), avec un agencement de cellules matricielles (2), qui sont respectivement conçues pour exécuter des procédés de fabrication, avec des moyens logistiques qui sont conçus pour exécuter des traitements logistiques et avec une logique de commande (4) supérieure, qui est conçue pour commander la cellule matricielle (2) et les moyens logistiques, **caractérisé en ce que** des modèles de données propriétaires des cellules matricielles (2) et des moyens logistiques sont reliés par des unités d'ontologie, ce qui permet d'obtenir un flux de données continu entre les cellules matricielles (2) et les moyens logistiques et que, en fonction des données du flux de données, des procédés de fabrication sont définis et exécutés automatiquement dans des cellules matricielles (2) individuelles et/ou que des procédés de production sont définis et exécutés automatiquement dans des cellules logistiques individuelles, des traitements logistiques sont définis et exécutés automatiquement dans des moyens logistiques individuels, une unité de ressources (6), une unité de processus (7) et une unité de produits (8) étant prévues comme unités d'ontologie, dans l'unité de ressources (6), les données décrivant les procédés de fabrication et les traitements logistiques sont structurées et rendues disponibles sous forme numérique par le biais d'ontologies, des données de produit (10) étant prévues et rendues disponibles dans l'unité de produit (8) et des procédés de fabrication étant programmés dans un code de programme exécutable dans l'unité de traitement (7) en fonction de données de modèles de données propriétaires de l'unité de ressources (6) et de l'unité de produits (8) pour des moyens de fabrication ou des moyens de travail.
